# EUROPÄISCHE PATENTSCHRIFT

(11) **EP 3 024 692 B1**
(45) Veröffentlichungstag und Bekanntmachung des Hinweises auf die Patenterteilung: **01.05.2019**
(21) Anmeldenummer: 14729296.5
(22) Anmeldetag: 06.06.2014
(51) Int. Cl.: B60N 2/08

(54) **FREIGABE EINER SITZLÄNGSVERSTELLUNG EINES FAHRZEUGSITZES MIT HÖHENVERSTELLUNG UND KLAPPLEHNE DURCH EINEN FONDINSASSEN**
RELEASE OF A LONGITUDINAL ADJUSTMENT OF A VEHICLE SEAT WITH A HEIGHT ADJUSTMENT AND FOLDABLE BACKREST BY REAR PASSANGERS
LIBÉRATION D'UN RÉGLAGE EN LONGUEUR D'UN SIÈGE DE VEHICULE AVEC UN RÉGLAGE EN HAUTEUR ET DOSSIER RABATTABLE PAR DES PASSAGERS ARRIERE

(30) Priorität: 24.07.2013 DE 102013012306
(43) Veröffentlichungstag der Anmeldung: 01.06.2016
(73) Patentinhaber: Volkswagen Aktiengesellschaft, 38440 Wolfsburg (DE)
(72) Erfinder: KRAMER, Matthias, 38102 Braunschweig (DE)
(86) Internationale Anmeldenummer: PCT/EP2014/061784
(87) Internationale Veröffentlichungsnummer: WO 2015/010819

(56) Entgegenhaltungen:
- DE-A1-102009 051 701
- US-A1- 2003 047 977

## Beschreibung

Die Erfindung betrifft einen Fahrzeugsitz mit den im Oberbegriff des Anspruchs 1 genannten Merkmalen.

Aus der Druckschrift DE 10 2009 051 701 A1 der Anmelderin ist ein Fahrzeugsitz bekannt, der mittels einer für den Nutzer angeordneten Handhabe eine einfache an einem Fahrzeugsitz sowohl von vorne als auch von hinten ausführbare Ver- und Entriegelungsbetätigung an einem Ver- und Entriegelungsmechanismus einer Sitzlängsverstellung ermöglicht.

Der bekannte Fahrzeugsitz zeichnet sich dadurch aus, dass er einerseits einen im vorderen Bereich des Fahrzeugsitzes angeordneten vorderen Betätigungshebel zur Freigabe einer Sitzlängsverstellung des Fahrzeugsitzes aufweist, der einen Ver- und Entriegelungsmechanismus freigibt oder verriegelt. Der Fahrzeugsitz weist andererseits einen im hinteren Bereich des Fahrzeugsitzes angeordneten hinteren Betätigungshebel auf, wobei eine Betätigung des hinteren Betätigungshebels auf den vorderen Betätigungshebel einwirkt. Eine leichtgängige Bedienbarkeit der Betätigungshebel wird durch eine zwischen den Betätigungshebeln angeordnete Bowdenzugmechanik bewirkt.

Der vordere Betätigungshebel wirkt auf den mindestens einen in oder an den Sitzschienen eines Sitzschienenpaares angeordneten Ver- und Entriegelungsmechanismus ein, wobei eine Freigabe beziehungsweise Verriegelung der Sitzlängsverstellung des Fahrzeugsitzes durch Freigabe beziehungsweise Verriegelung einer je Sitzschienenpaar ausgebildeten sitzfesten Sitzoberschiene gegenüber einer karosseriefesten Sitzunterschiene bewirkt wird.

Ferner ist der vordere Betätigungshebel im vorderen Bereich eines Sitzteiles, vorzugsweise im vorderen Bereich und unterhalb einer Sitzwanne, angeordnet und bei seiner Bewegung zur Freigabe der Sitzlängsverstellung des Fahrzeugsitzes um eine erste Schwenkachse, die quer zur Fahrzeuglängsrichtung liegt, schwenkbar.

Der hintere Betätigungshebel ist dagegen im Bereich eines Rückenlehnenseitenteiles einer Rückenlehne, vorzugsweise in der Mitte oder nahe der Mitte des Rückenlehnenteiles, angeordnet und bei seiner Bewegung zur Freigabe der Sitzlängsverstellung des Fahrzeugsitzes um eine zweite Schwenkachse, die ebenfalls quer zur Fahrzeuglängsrichtung liegt, schwenkbar.

Die Mechanik ist so ausgeführt, dass eine erste Entriegelungsbewegung durch den hinteren Betätigungshebel über die Bowdenzugmechanik zwangsläufig zu einer zweiten gleichzeitig stattfindenden Entriegelungsbewegung des vorderen Betätigungshebels und dadurch zur Freigabe der Sitzlängsverstellung führt.

Andererseits führt eine Entriegelungsbewegung des vorderen Betätigungshebels zur Freigabe der Sitzlängsverstellung unabhängig von dem hinteren Betätigungshebel, ebenfalls zur Freigabe der Sitzlängsverstellung, da die Entriegelungsbewegung des vorderen Betätigungshebels die Bowdenzugmechanik und somit den hinteren Betätigungshebel nicht beeinflusst.

Zur Sicherung der Leichtgängigkeit der Betätigung umfasst die Bowdenzugmechanik ein Bowdenzuggetriebe, welches eine Übersetzung der ersten Entriegelungsbewegung des hinteren Betätigungshebels ermöglicht, wodurch eine kraftverringernde Betätigung des vorderen Betätigungshebels und eine einen geringen Verstellweg aufweisende erste Entriegelungsbewegung bewirkbar ist.

Ferner dient das in der Bowdenzugmechanik angeordnete Bowdenzuggetriebe dazu, eine Umlenkung der ersten Entriegelungsbewegung des hinteren Betätigungshebels von der quer zur Fahrzeuglängsrichtung liegenden zweiten Schwenkachse in Richtung der Höhenerstreckung der Rückenlehne zu ermöglichen.

Schließlich umfasst die Bowdenzugmechanik ein Bowdenzugtoleranzausgleichselement, welches fertigungs- und/oder temperaturabhängige Toleranzen ausgleicht.

Der vorliegenden Erfindung liegt die Aufgabe zugrunde, einen Fahrzeugsitz zur Verfügung zu stellen, welcher gegenüber dem bekannten Fahrzeugsitz Einstellungsfunktionen aufweist, die bei dem bekannten Fahrzeugsitz mit Bowdenzugmechanik bisher nicht vorhanden waren, und welcher dennoch über eine entsprechende Bowdenzugmechanik bedient werden kann.

Der erfindungsgemäße Fahrzeugsitz ist mit einem gegenüber einem Sitzteil des Fahrzeugsitzes neigungsverstellbaren und umklappbaren Rückenlehnenteil und einem gegenüber den Sitzschienen eines Sitzschienenpaares höhenverstellbaren Sitzteil, welches mit dem Rückenlehnenteil verbunden ist, ausgestattet.

Wie bisher weist der Fahrzeugsitz einerseits einen im vorderen Bereich des Fahrzeugsitzes angeordneten vorderen Betätigungshebel zur Freigabe einer Sitzlängsverstellung des Fahrzeugsitzes auf, der einen Ver- und Entriegelungsmechanismus freigibt oder verriegelt. Der Fahrzeugsitz weist andererseits einen im hinteren Bereich des Fahrzeugsitzes an der Rückenlehne angeordneten hinteren Betätigungshebel auf, wobei eine Betätigung des hinteren Betätigungshebels auf den vorderen Betätigungshebel einwirkt, wobei eine leichtgängige Bedienbarkeit der Betätigungshebel durch eine zwischen den Betätigungshebeln angeordnete Bowdenzugmechanik bewirkt wird, wobei ein zwischen dem an der Rückenlehne angeordneten hinteren Betätigungshebel und dem vorderen Betätigungshebel angeordneter Bowdenzug der Bowdenzugmechanik in seinem Verlauf eine erste Bowdenzugüberlänge aufweist, die bei der Neigungsverstellung und/oder der Klappung des Rückenlehnenteiles genutzt wird, um den sich durch die Verstellbewegungen des Rückenlehnenteiles verändernden Abstand zwischen dem hinteren und vorderen Anlenkpunkt des Bowdenzuges am hinteren Betätigungshebel und am vorderen Betätigungshebel auszugleichen.

Erfindungsgemäß ist vorgesehen, dass der Bowdenzug der Bowdenzugmechanik in seinem weiteren Verlauf eine zweite Bowdenzugüberlänge aufweist, die bei der Höhenverstellung des Sitzteiles genutzt wird, um den sich verändernden Abstandes zwischen dem hinteren und dem vorderen Anlenkpunkt des Bowdenzuges am hinteren Betätigungshebel und am vorderen Betätigungshebel auszugleichen.

Durch die beiden Bowdenzugüberlängen werden die durch Höhenverstellung des Sitzteiles und/oder durch die Klappverstellung und/oder Neigungsverstellung des Rückenlehnenteiles gegen dem Sitzteil verursachten, vergleichsweise großen Abstandsveränderungen zwischen den beiden Anlenkpunkten des Bowdenzuges ausgeglichen. Gleichzeitig bleiben die vorteilhaften Bedienfunktionen der Bowdenzugmechanik erhalten oder werden sogar verbessert.

Es ist vorgesehen, dass die erste Bowdenzugüberlänge zum Ausgleich der sich verändernden Abstände zwischen dem hinteren und dem vorderen Anlenkpunkt des Bowdenzuges am hinteren Betätigungshebel und am vorderen Betätigungshebel bei der Neigungsverstellung und/oder der Klappung des Rückenlehnenteiles bevorzugt im Bereich eines zwischen Sitzteil und Rückenlehnenteil angeordneten Beschlages, insbesondere unterhalb einer Verkleidung des Beschlages auf der Außenseite des Beschlages angeordnet ist.

Durch die erste Bowdenzugüberlänge wird dem Bowdenzug ein Leerweg ermöglicht, wenn das Rückenlehnenteil in seiner Neigung verstellt und/oder aus einer im Wesentlichen vertikalen Position in eine im Wesentlichen horizontale Position geklappt wird. Während der Ausführung des Leerweges passt sich der Bowdenzug mittels der erste Bowdenzugüberlänge in seiner Länge den veränderten Abständen an, ohne dass es zu einer Entriegelung des Ver- und Entriegelungsmechanismus des Sitzteiles kommt.

Es ist ferner vorgesehen, das die zweite Bowdenzugüberlänge zum Ausgleich der sich verändernden Abstände zwischen dem hinteren und dem vorderen Anlenkpunkt des Bowdenzuges am hinteren Betätigungshebel und am vorderen Betätigungshebel bei der Höhenverstellung des Sitzteiles bevorzugt unterhalb des Sitzteiles angeordnet ist.

Durch die zweite Bowdenzugüberlänge wird ein weiterer Leerweg des Bowdenzugs und damit ein Abstandsausgleich der Anlenkpunkte des Bowdenzugs während der Ausübung der Höhenverstellung des Sitzteiles erzielt.

Nach einer weiteren Ausgestaltung der Erfindung ist vorgesehen, dass der vordere Anlenkpunkt des Bowdenzuges in bevorzugter Ausgestaltung der Erfindung an einem Bowdenzuggegenhalter gehalten ist, der unterhalb des Sitzteiles mit einer gegenüber einer karosseriefesten Sitzunterschiene angeordneten sitzfesten Sitzoberschiene eines Sitzschienenpaares verbunden ist. Durch diese Maßnahme wird die Unabhängigkeit des Bowdenzugs von der Sitzlängsverstellung gewährleistet, das heißt die Sitzlängsverstellung führt zu keiner Betätigung des Bowdenzugs und damit des Sitzlehnenteils.

In weiterer bevorzugter Ausgestaltung ist vorgesehen, dass der vordere Betätigungshebel auf den mindestens einen in oder an den Sitzschienen eines Sitzschienenpaares angeordneten Ver- und Entriegelungsmechanismus einwirkt. Dabei wird eine Freigabe beziehungsweise Verriegelung der Sitzlängsverstellung des Fahrzeugsitzes durch Freigabe beziehungsweise Verriegelung einer je Sitzschienenpaar ausgebildeten sitzfesten Sitzoberschiene gegenüber einer karosseriefesten Sitzunterschiene bewirkt. Auf diese Weise lässt sich die Sitzlängsverstellung des Fahrzeugsitzes einfach realisieren und bequem durch einen Frontinsassen des Fahrzeuges, insbesondere den Sitzbenutzer ausführen.

Vorzugsweise ist der vordere Betätigungshebel im vorderen Bereich eines Sitzteiles, vorzugsweise im vorderen Bereich und unterhalb einer Sitzwanne, angeordnet und bei seiner Bewegung zur Freigabe der Sitzlängsverstellung des Fahrzeugsitzes um eine erste Schwenkachse, die quer zur Fahrzeuglängsrichtung liegt, schwenkbar. Auf diese Weise lässt sich die Sitzlängsverstellung des Fahrzeugsitzes in besonders komfortabler Weise durch den Sitzbenutzer betätigen, um die Sitzposition an die Beinlänge anzupassen. Die Betätigungsrichtung quer zur Fahrzeuglängsrichtung erleichtert darüber hinaus die Kraftübertragung durch den Sitzbenutzer. Durch die Anordnung unterhalb der Sitzwanne wird zudem eine weitgehend versteckte Unterbringung des vorderen Betätigungshebels erzielt.

Der hintere Betätigungshebel ist bevorzugt im Bereich eines Rückenlehnenseitenteiles des Rückenlehnenteiles, vorzugsweise in der Mitte oder nahe der Mitte des Rückenlehnenteiles, angeordnet und ist bei seiner Bewegung zur Freigabe der Sitzlängsverstellung des Fahrzeugsitzes um eine zweite Schwenkachse, die quer zur Fahrzeuglängsrichtung liegt, schwenkbar. Auf diese Weise ist der hintere Betätigungshebel gut durch einen Fondinsassen zu erreichen, wenn dieser beispielsweise aus dem Fahrzeug aussteigen möchte. Die Betätigungsrichtung quer zur Fahrzeuglängsrichtung erleichtert darüber hinaus die Kraftübertragung durch den Insassen.

Vorzugsweise führt eine erste Entriegelungsbewegung durch den hinteren Betätigungshebel über die Bowdenzugmechanik zwangsläufig zu einer zweiten, insbesondere gleichzeitig stattfindenden Entriegelungsbewegung des vorderen Betätigungshebels und dadurch zur Freigabe der Sitzlängsverstellung. Somit ist die Freigabe der Sitzlängsverstellung vom Fondinsassen bewirkbar, so dass dieser ohne Hilfe einer weiteren Person den Fahrzeugsitz längsverstellen kann, wenn er etwa aussteigen möchte.

Auf der anderen Seite ist eine Entriegelungsbewegung des vorderen Betätigungshebels zur Freigabe der Sitzlängsverstellung vorzugsweise unabhängig von dem hinteren Betätigungshebel möglich, damit eine Sitzlängsverstellung durch den Sitzbenutzer unabhängig von der Verstellung der Sitzlehnenneigung durchführbar ist. Dies wird bevorzugt dadurch realisiert, dass die Entriegelungsbewegung des vorderen Betätigungshebels nicht die Bowdenzugmechanik und somit nicht den hinteren Betätigungshebel beeinflusst.

In weiterer bevorzugter Ausgestaltung umfasst die Bowdenzugmechanik ein Bowdenzuggetriebe, welches eine Übersetzung der ersten Entriegelungsbewegung des hinteren Betätigungshebels bewirkt. Auf diese Weise wird die Leichtgängigkeit der Betätigung erhöht, das heißt eine kraftverringernde Betätigung ermöglicht. Das Bowdenzuggetriebe ermöglicht vorzugsweise eine Umlenkung der ersten Entriegelungsbewegung des hinteren Betätigungshebels von der quer zur Fahrzeuglängsrichtung liegenden zweiten Schwenkachse in Richtung der Höhenerstreckung der Rückenlehne.

Die Bowdenzugmechanik umfasst in bevorzugter Ausführung ferner ein Bowdenzugtoleranzausgleichselement. Dieses gleicht fertigungs- und/oder temperaturabhängige Toleranzen aus.

Im Detail zeigen die Figuren 1, 2A, 2B und 3 zunächst den Stand der Technik.

Figur 1 zeigt einen bekannten Fahrzeugsitz in einer Seitenansicht zur Darstellung der grundsätzlichen Anordnung eines vorderen und hinteren Betätigungshebels zur Entriegelung einer Sitzlängsverstellung und einer dazwischen angeordneten Bowdenzugmechanik.

Die Figur 2A zeigt eine perspektivische Ansicht auf den röntgenartig dargestellten Fahrzeugsitz zur Verdeutlichung der Einbaulage der beiden Betätigungshebel und der Bowdenzugmechanik.

Die Figur 2B zeigt die Bowdenzugmechanik in Einzelansicht.

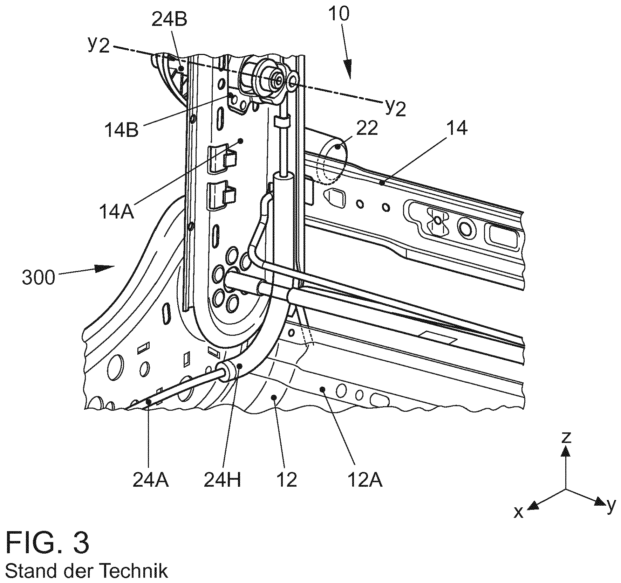

Schließlich zeigt die Figur 3 den Stand der Technik in einer perspektivischen Ansicht auf eine Sitzwanne des Sitzteiles und ein Rückenlehnenseitenteil der Rückenlehne mit dem integrierten hinteren Betätigungshebel.

Der Stand der Technik wird nachfolgend erläutert. Für die Zwecke der vorliegenden Beschreibung nach dem Stand der Technik und der Beschreibung der nachfolgenden Erfindung soll mit "+x" ("plus x") die übliche Fahrtrichtung eines Fahrzeugs bezeichnet werden, mit "-x" ("minus x") die Richtung entgegen seiner üblichen Fahrtrichtung, mit "y" wird die Richtung in der Horizontalen quer zur x-Richtung bezeichnet, und mit "z" wird die Richtung in der Vertikalen quer zur x-Richtung bezeichnet. Diese Bezeichnungsweise der Raumrichtungen in kartesischen Koordinaten entspricht dem in der Kraftfahrzeugindustrie allgemein verwendeten Koordinatensystem. Innerhalb aller Figuren werden nachfolgend die gleichen Bezugszeichen für gleiche Bauteile verwendet, wobei gegebenenfalls nicht in jeder Figur erneut alle bereits vorgestellten Bauteile anhand der Bezugszeichen nochmals erläutert werden.

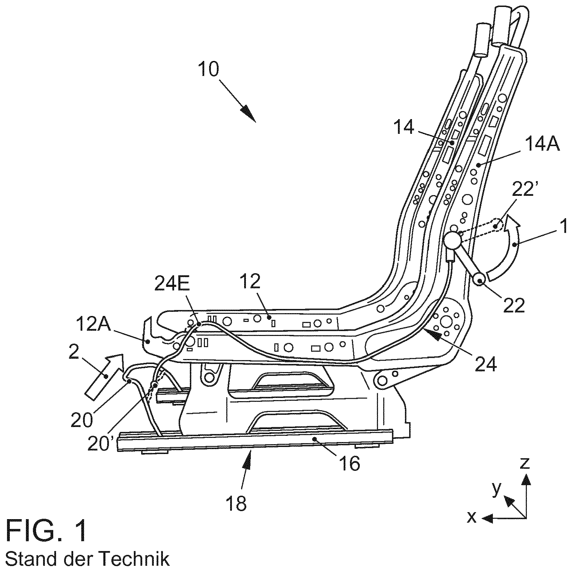

Figur 1 zeigt einen Fahrzeugsitz 10 in einer Seitenansicht zur Darstellung der grundsätzlichen Anordnung eines vorderen und hinteren Betätigungshebels 20, 22 zur Entriegelung einer Sitzlängsverstellung und einer zwischen dem vorderen und hinteren Betätigungshebel 20, 22 angeordneten Bowdenzugmechanik 24. Der Fahrzeugsitz 10 umfasst ein Sitzteil 12 und ein Rückenlehnenteil 14 und ist über ein Sitzschienenpaar 16 auf einer Karosserie befestigt.

Die Sitzlängsverstellung erfolgt durch Ver- und Entriegelung eines Ver- und Entriegelungsmechanismus 18, der mindestens an oder in mindestens einer Sitzschiene 16 des Sitzschienenpaares 16 ausgeführt ist.

Die Entriegelung kann entweder durch Bedienung des vorderen Betätigungshebels 20 durch einen Frontinsassen des Fahrzeuges oder durch Bedienung des hinteren Betätigungshebels 22 durch einen Fondinsassen des Fahrzeuges vorgenommen werden. Bei einer Betätigung durch den Fondinsassen wird der unbetätigte, hintere Betätigungshebel 22 in die Position 22' entgegen der Uhrzeigerrichtung verschwenkt, so dass der hintere Betätigungshebel in die in gestrichelten Linien dargestellte Betätigungsposition 22' verlagert wird. Die gezeigte Betätigungsrichtung - ein Verschwenken in Uhrzeigerrichtung - ist nur beispielhaft gewählt. Eine Betätigung des hinteren Betätigungshebels 20, 20' in Uhrzeigerrichtung ist ebenfalls ausführbar.

Über die nachfolgend noch näher erläuterte Bowdenzugmechanik 24, die vom hinteren Betätigungshebel 22 ausgehend zum vorderen Betätigungshebel 20 verläuft, bei der der Bowdenzug 24A der Bowdenzugmechanik 24 über einen Bowdenzuggegenhalter 24E an einer Sitzwanne 12A des Sitzteiles 12 befestigt ist, wird die Schwenkbewegung des hinteren Betätigungshebels 22, 22' auf den vorderen Betätigungshebel 20, 20' übertragen, so dass der vordere Betätigungshebel 20 aus der unbetätigten Position in die betätigte Position 20' verschwenkt wird, so dass durch die erste Entriegelungsbewegung 1 des zweiten Betätigungshebels 22 gleichzeitig eine zweite Entriegelungsbewegung 2 des ersten Betätigungshebels 20 hervorgerufen wird. Diese zweite Entriegelungsbewegung 2 führt dann zwangsläufig zur Entriegelung des Ver- und Entriegelungsmechanismus 18 im Bereich mindestens einer Sitzschiene des Sitzschienenpaares 16.

Die Bedienung durch den auf dem Fahrzeugsitz 10 sitzenden Sitzbenutzer erfolgt über den vorderen Betätigungshebel 20, durch Greifen in den vorderen Bereich des Sitzteiles 12 etwas unter die Sitzwanne 12A, so dass der Sitzbenutzer den vorderen Betätigungshebel 20 leicht zur Entriegelung der Sitzlängsverstellung erreichen kann.

Der hintere Betätigungshebel 22 bleibt aber bei Betätigung des vorderen Betätigungshebels 20 in seine betätigte Position 20' in seiner unbetätigten Position 22 und bewegt sich nicht.

Die Betätigung zur Sitzlängsverstellung von vorne ist somit unabhängig von der hinteren Betätigung möglich.

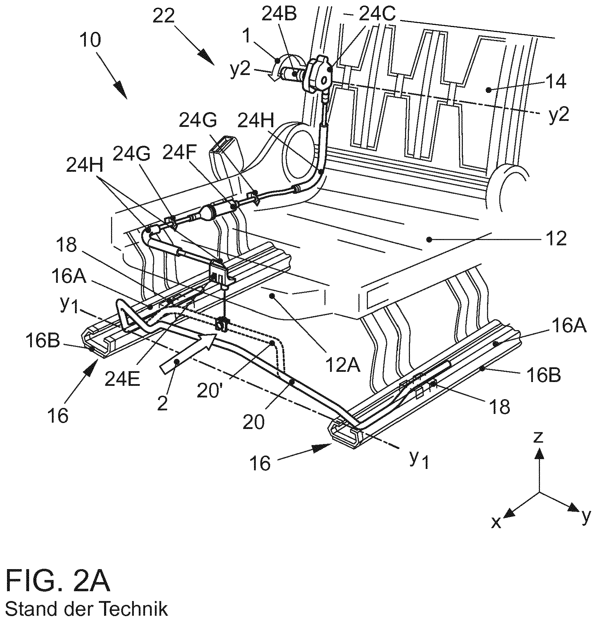

Besonders vorteilhaft ist, wie vorgesehen, die gewählte Anordnung des hinteren Betätigungshebels 22 dann, wenn, wie in Figur 1 und 2A dargestellt, der hintere Betätigungshebel 22 im Bereich des Rückenlehnenseitenteiles 14A in einer vom Fondinsassen leicht erreichbaren Höhe im Wesentlichen in der Mitte beziehungsweise je nach Fahrzeug leicht oberhalb oder unterhalb der Mitte der sich in y-Richtung erstreckenden Rückenlehne 14 angeordnet ist.

Somit ergeben sich, wie beschrieben und in den Figuren gezeigt, für beide Betätigungshebel 20, 22 sehr gute ergonomische Bedieneigenschaften.

Insbesondere die Betätigung vom Fond aus erfolgt somit in einer für den Fondinsassen optimalen Position, wobei durch die Anordnung der Bowdenzugmechanik 24 sehr geringe Betätigungskräfte erreicht werden. Die geringen Betätigungskräfte werden erstens erreicht durch die Eigenschaften der Bowdenzugmechanik 24 selbst als auch zweitens durch für den vorderen und hinteren Betätigungshebel 20, 22 vorliegende günstige Hebelverhältnisse. Auf weitere Vorteile, die eine leichte Bedienung ermöglichen, wird im Rahmen der detaillierten Beschreibung der Bowdenzugmechanik 24 im Folgenden noch näher eingegangen.

Figur 2A zeigt eine perspektivische Ansicht auf den röntgenartig dargestellten Fahrzeugsitz 10 zur Verdeutlichung der Einbaulage der beiden Betätigungshebel 20, 22 und der Bowdenzugmechanik 24. Figur 2A zeigt den Fahrzeugsitz 10, das Sitzteil 12 und die Rückenlehne 14, wobei der hintere Betätigungshebel 22 im Bereich einer Mittelkonsole (nicht dargestellt) zwischen zwei Vordersitzen angeordnet ist. Dadurch ist der hintere Betätigungshebel 22 sowohl von einem hinter dem Fahrzeugführer sitzenden Fondinsassen als auch von einem hinter dem Beifahrer sitzenden Fondinsassen sehr gut erreichbar.

Der hintere Betätigungshebel 22 an einem Fahrersitz oder einem Beifahrersitz ist somit vorzugsweise jeweils gegenüber der Schwellerseite eines Fahrzeuges angeordnet. Eine Anordnung auf der Schwellerseite ist jedoch ebenfalls denkbar. Hier sitzen jedoch in den meisten Fahrzeugen bereits die Betätigungskomponenten der Lordoseverstellung.

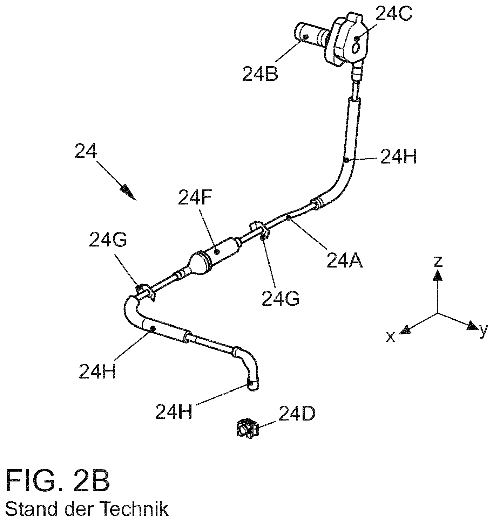

Die nachfolgende Beschreibung der Bowdenzugmechanik 24 betrifft Figur 2A und gleichzeitig Figur 2B sowie teilweise Figur 3, in der die Bowdenzugmechanik 24 mit gleichen Bauteilen und Bezugszeichen vergrößert dargestellt ist.

Der hintere Betätigungshebel 22 sitzt auf einer Welle 24B, die auf einer quer zur Fahrtrichtung x verlaufenden Schwenkachse y2-y2 angeordnet ist. Die Welle 24B führt in ein Bodenzuggetriebe 24C, in dem die Drehbewegung der Welle, hervorgerufen durch die erste Entriegelungsbewegung 1 des hinteren Betätigungshebels 20' für den Bowdenzug 24A der Bowdenzugmechanik 24 übersetzt und in Richtung der Höhenerstreckung der Rückenlehne 14 in z-Richtung umgelenkt wird.

Die bereits erwähnte geringe Betätigungskraft aufgrund der Auswahl des die Bewegung übertragenden Übertragungsmittels - Bowdenzug 24A - und aufgrund der günstigen Hebelverhältnisse der Bedienhebel 20, 22 wird drittens durch das Bowdenzuggetriebe 24C zusätzlich noch weiter verbessert, da die Betätigungskräfte somit nicht nur aufgrund des ausgewählten Bowdenzuges 24A und der Hebelverhältnisse, sondern auch aufgrund der getriebeseitigen Übersetzung des Bowdenzuggetriebes 24C besonders gering sind. Auf die vorteilhafte Anordnung der Welle 24B und des Bowdenzuggetriebes 24C im Rückenlehnenseitenteil 14A wird in Figur 3 noch separat eingegangen.

Der Bowdenzug 24A wird über Bowdenzugführungselemente 24 zunächst auf der vertikalen y-Richtung im Bereich der Rückenlehne 14 in die horizontale x-Richtung in das Sitzteil 12 geführt, wobei im horizontalen Bereich des Sitzteiles 12 Bowdenzugfixierungselemente 24G am Bowdenzug 24A angeordnet sind, mittels denen der Bowdenzug 24A an der Sitzwanne 12A fixierbar ist. Im Ausführungsbeispiel zwischen den Bowdenzugfixierungselementen 24G oder auch an anderer Stelle ist ein Bowdenzugtoleranzausgleichselement 24F angeordnet, welches fertigungsseitige und temperaturbedingte Bauteiltoleranzen ausgleicht.

Aus dem horizontalen Bereich in x-Richtung wird der Bowdenzug 24A in horizontaler Lage bleibend in y-Richtung über das vordere Bowdenzugführungselement 24H ein weiteres Mal umgelenkt, so dass der Bowdenzug 24A endseitig in dem Bowdenzuggegenhalter 24E eingehängt werden kann. Von dort wird die Bowdenzugseele in einer Bowdenzugeinhängung 24D befestigt beziehungsweise eingehängt, die am vorderen Betätigungshebel 20 befestigt ist.

Wird der in Figur 2A nicht dargestellte hintere Betätigungshebel 22 entgegen der Uhrzeigerrichtung in die Position 22' (Figur 1) verschwenkt, zieht die Bowdenzugseele des Bowdenzuges 24A den vorderen Betätigungshebel aus der unbetätigten Position 20 in die betätigte Position 20', so dass der vordere Betätigungshebel 20, 20' während der zweiten Entriegelungsbewegung 2 leicht um eine quer zur Fahrtrichtung x liegende erste Schwenkachse y1-y1 im Wesentlichen nach oben und leicht in +x-Richtung nach hinten schwenkt und dadurch über den mindestens einen Verriegelungsmechanismus 18 in mindestens einer der Sitzschienen des Sitzschienenpaares 16 die obere Sitzschiene 16A zur Sitzlängsverstellung gegenüber der unteren karosseriefesten Sitzschiene 16B freigibt.

Die Rückverschwenkung des hinteren Betätigungshebels 22 aus der betätigten Position 22' in die unbetätigte Position 22 erfolgt dadurch, dass der vordere Betätigungshebel aus der betätigten Position 20' in die unbetätigte Position 20, vorzugsweise federunterstützt, zurückkehrt, wodurch der Bowdenzug 24A über das Bodenzuggetriebe 24C die Welle 24 - in diesem Ausführungsbeispiel - in Uhrzeigerrichtung zurückdreht, so dass die unbetätigte Ausgangsposition des hinteren Betätigungshebels 22 wieder erreicht wird.

Zusätzlich ist zur Sicherstellung der Rückbewegung des zweiten Betätigungshebels 22' in die unbetätigte Position 22 innerhalb des Bowdenzuggetriebes 24C eine Rückstellfeder angeordnet, die ebenfalls dafür sorgt, dass der hintere Betätigungshebel 22' nach dem Loslassen des vorderen Betätigungshebels 20 und dessen Bewegung in die unbetätigte Position 20, neben der durch die Rückbewegung des vorderen Betätigungshebels 20 über den Bowdenzug 24A auf den hinteren Betätigungshebel 22 aufgebrachten Kraft eine zusätzliche Rückstellkraft für den hinteren Betätigungshebel 22 bewirkt. Dieses Rückstellfederelement wird während der Betätigung des hinteren Betätigungshebels 22 in die betätigte Position 22' gespannt und wirkt sofort nach Loslassen des hinteren Betätigungshebels 22' durch den Fondinsassen, so dass der hintere Betätigungshebel 22' unter Entspannung der Rückstellfeder wieder in seine unbetätigte Ausgangsposition 22 zurückkehrt, wobei im Normalfall einerseits die Rückstellwirkung des vorderen Betätigungshebels 20 als auch das im Bowdenzuggetriebe 24C angeordnete Federelement die Rückstellung bewirkt.

Fehlt jedoch in einem Ausnahmefall beispielsweise die Kraft zur Rückstellung aus dem vorderen Betätigungshebel 20, beispielsweise durch ein Verklemmen oder dergleichen oder reicht diese Rückstellkraft nicht aus, so ist eine Rückstellung des hinteren Betätigungshebels 22 vorteilhaft stets durch die Rückstellfeder im Bowdenzuggetriebe 24C gesichert.

Das System, insbesondere sowohl die Bowdenzugmechanik 24 als auch der hintere Betätigungshebel 22, ist mit geringem Änderungsaufwand in den meisten Sitzstrukturen der Fahrzeugsitze 10 integrierbar. Eine besonders geeignete Lösung zeigt Figur 3, bei der eine bereits in den meisten Rückenlehnenteilen 14 beidseitig für die Komponenten zur Lordosenverstellung vorhandene Aufnahme, beispielsweise eine Öffnung 14 genutzt werden kann. Zumeist ist nämlich bereits auf beiden Seiten in jedem Rückenlehnenseitenteil 14A eine solche Öffnung 14B vorgesehen, in dem die Komponenten zur Lordosenverstellung angeordnet beziehungsweise durch das Rückenlehnenseitenteil 14B hindurchgeführt sind. Meistens wird jedoch nur die Öffnung 14B der Schwellerseite, die der Mittelkonsole gegenüberliegt, genutzt.

Wie Figur 3 zeigt, kann diese Öffnung 14B dazu verwendet werden, dass das Bowdenzuggetriebe 24C mit seinem Gehäuse in die Öffnung 14B des Rückenlehnenseitenteiles 14A eingesetzt werden kann. Die derzeitige Struktur des Rückenlehnenteiles 14 beziehungsweise des Rückenlehnenseitenteiles 14A muss somit nicht verändert werden, wodurch neben der einfachen Serienumsetzung zudem ein nachträglicher Einbau möglich ist.

Die Länge der aus dem Bowdenzuggetriebe 24C herausragenden Welle 24B wird dabei von der Dicke der Polsterung des Rückenlehnenteiles 14 des Fahrzeugsitzes 10 bestimmt. Dadurch ist für den Fondinsassen nur der optisch ansprechende in optimaler Bedienposition angeordnete hintere Betätigungshebel 22, 22' sichtbar.

Diese Ausgestaltung wird für einen Fahrzeugsitz 10, der eine Klapplehne und eine Höhenverstellung aufweist, modifiziert.

In den nachfolgenden Figuren wird die erfindungsgemäße Modifikation des vorstehend beschriebenen Fahrzeugsitzes in Ausführungsbeispielen erläutert, wobei wiederum gleiche Bezugszeichen für gleiche Bauteile verwendet werden. Um die gegenüber dem Stand der Technik geänderten und/oder neuen Bauteile besser zu verdeutlichen, werden diese neuen Bauteile in den Figuren mit dreistelligen Bezugsziffern versehen.

Der erfindungsgemäße Fahrzeugsitz 10, 100 umfasst in einer ersten Ausgestaltung ein Sitzteil 12, 120, das im Verhältnis zum vorderen Betätigungshebel 20, 20' in z-Richtung, das heißt in Höhenrichtung verstellbar ist. Die weiteren bisherigen Funktionen des Sitzteiles 12 bleiben erhalten.

Ferner ist in einer weiteren Ausgestaltung das Rückenlehnenteil 14 wie bisher über einen Beschlag 300 durch Betätigung eines Drehverstellers um eine Schwenkachse y3-y3 neigungsverstellbar. zweiten Gemäß einer weiteren Ausgestaltung des erfindungsgemäßen Fahrzeugsitzes 10, 100 ist das Rückenlehnenteil mit den Bezugszeichen 14, 140 nicht nur neigungsverstellbar, sondern auch um eine Klappachse y300-y300 klappbar. Die Klappachse y300-y300 liegt im Ausführungsbeispiel auf der bisherigen Schwenkachse y3-y3.

Diese Klappfunktion, die neben der Komfort-Neigungsverstellung ausgebildet wird, wird in Fachkreisen als klappbares Rückenlehnenteil 140, kurz auch als Klapplehne bezeichnet.

Bei der Klapplehne 140 werden die Beschlagteile des Beschlages 300 komplett entriegelt, so dass das Rückenlehnenteil 140 anders als bei der Komfort-Neigungsverstellung schlagartig auf das höhenverstellbare Sitzteil 120 umklappt.

Der erfindungsgemäß neben den bisherigen Funktionen über das Sitzteil 12, 120 höhenverstellbare Fahrzeugsitz und/oder der mit einer Klapplehne 14, 140 versehene Fahrzeugsitz wird nachfolgend mit den Bezugszeichen 10, 100 geführt.

Die folgenden Figuren zeigen die Erfindung. Es zeigen:

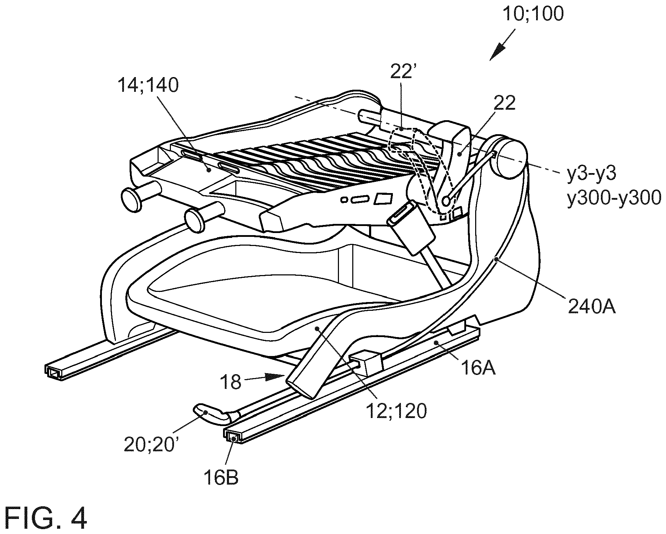

- Figur 4: den über das Sitzteil höhenverstellbaren Fahrzeugsitz mit der Klapplehne in ihrer geklappten Position;

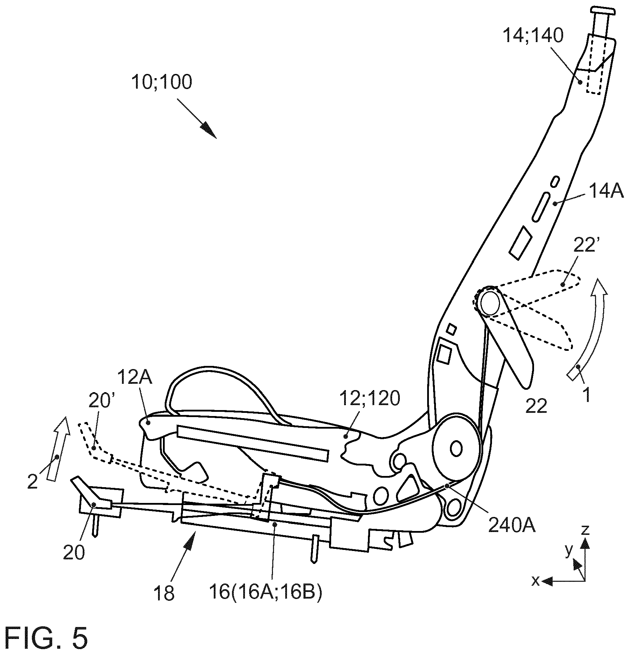

- Figur 5: den Fahrzeugsitz in einer Seitenansicht analog zu Figur 1 zur Darstellung der grundsätzlichen Anordnung des vorderen und des hinteren Betätigungshebels zur Entriegelung einer Sitzlängsverstellung und einer zwischen dem vorderen und hinteren Betätigungshebel modifizierten angeordneten Bowdenzugmechanik;

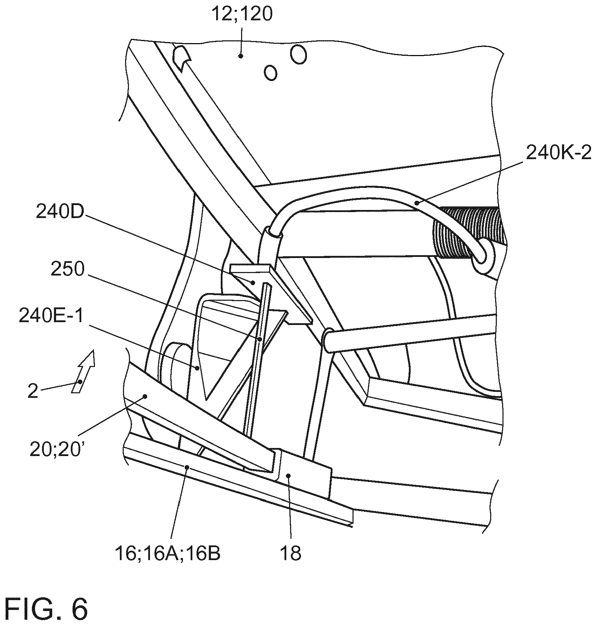

- Figur 6: eine perspektivische Ansicht schräg von vorn auf den Fahrzeugsitz unter das Sitzteil zur Verdeutlichung der von der Höhenverstellung des Fahrzeugsitzes unabhängigen Bowdenzuganbindung an einer Sitzoberschiene eines Sitzschienenpaares in einer ersten Ausführungsform;

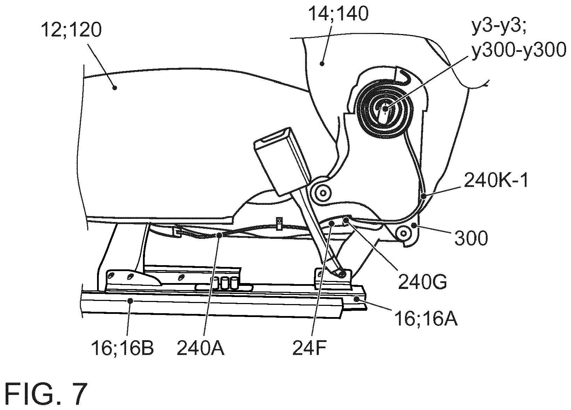

- Figur 7: eine Seitenansicht auf den Fahrzeugsitz zur weiteren Verdeutlichung der Einbaulage der erfindungsgemäßen Bowdenzugmechanik;

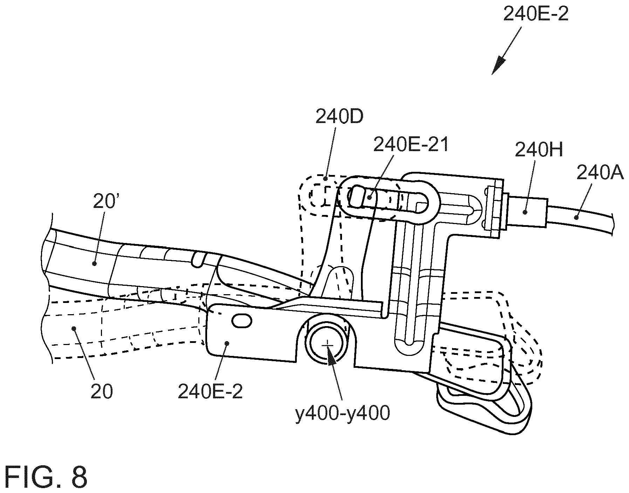

- Figur 8: eine Seitenansicht einer von der Höhenverstellung des Fahrzeugsitzes unabhängigen Bowdenzuganbindung an einer Sitzoberschiene eines Sitzschienenpaares in einer zweiten Ausführungsform.

In den nachfolgenden Figuren 4 bis 8 werden die modifizierte Ausgestaltung und die zugehörigen Ausführungsformen der Bowdenzugmechanik 240 des Fahrzeugsitzes 10, 100 erläutert.

Zur Realisierung der Höhenverstellung des Sitzteiles 120 und der Klappbarkeit der Klapplehne 140 ist erfindungsgemäß vorgesehen, die Länge des Bowdenzuges 240A insgesamt zu verändern.

Die Figur 4 zeigt den über das Sitzteil 12, 120 höhenverstellbaren Fahrzeugsitz 10, 100 mit der Klapplehne 14, 140 in ihrer geklappten Position.

Die Figur 5 zeigt den Fahrzeugsitz 10, 100 in einer Seitenansicht analog zu Figur 1, jedoch nicht mit geklapptem Rückenlehnenteil 14, 140.

Es wird deutlich, dass zunächst die Führung des Bowdenzuges 240A der Bowdenzugmechanik 240 verändert, das heißt modifiziert ist.

Außerdem ist die Länge des Bowdenzuges 240A gegenüber dem Stand der Technik insgesamt verlängert.

Ferner ist die Anordnung der Bowdenzugfixierungselemente 240G an die neue Führung des Bowdenzuges 240A und die neuen funktionalen Anforderungen angepasst.

Der Bowdenzug 240A ist derart modifiziert angeordnet, dass der Ver- und Entriegelungsmechanismus 18 durch Betätigung 1, 2 des vorderen Betätigungshebels 20, 20' und/oder des hinteren Betätigungshebels 22, 22' unabhängig von der Klappung des Rückenlehnenteils 140 um y300-y300 und/oder unabhängig von der Höhenverstellung des Sitzteiles 120 in z-Richtung nach oben oder in z-Richtung nach unten entriegelt wird.

Wie Figur 5 zeigt, ist der Bowdenzug 240A bedingt durch die klappbar ausgebildete Klapplehne 14, 140 und die Höhenverstellung des Sitzteiles 12, 120 innerhalb des Fahrzeugsitzes 10, 100 anders verlegt und in anderer Weise mit dem Fahrzeugsitz 10, 100 verbunden.

Der Bowdenzug 240A wird ausgehend von dem Bowdenzuggetriebe 24C, welches sich mit seiner Welle 24B in das Rückenlehnenteil 140 hinein nach innen erstreckt, anders als in Figur 2 nach dem Stand der Technik dargestellt, von der inneren Seite des Rückenlehnenteiles 140 auf die Außenseite des Rückenlehnenteiles 140 geführt. Diese neue Anordnung ist in Figur 5 gut sichtbar.

Von dort erfolgt eine Führung des Bowdenzuges 240A zu dem Beschlag 300, wobei die Anordnung des Bowdenzuges 240A in einem vorhandenen Freiraum zwischen dem Beschlag 300 und einer nicht näher dargestellten Verkleidung des Beschlages 300 erfolgt.

Figur 7 zeigt dazu eine Seitenansicht des Fahrzeugsitzes 10, 100 zur Verdeutlichung der Einbaulage des Bowdenzuges 240 der Bowdenzugmechanik 240 im Bereich des Beschlages 300.

Der Bowdenzug 240A wird an diesem Beschlag 300 mittels eines Bowdenzugfixierungselementes 240G, insbesondere mittels eines Clipselementes fixiert.

Im weiteren Verlauf des Bowdenzuges 240A ist innerhalb des Bowdenzuges 240A wie im Stand der Technik ein Bowdenzugtoleranzausgleichselement 24F angeordnet, welches ferner Fertigungstoleranzen zwischen dem Sitzteil 12, 120 und dem Rückenlehnenteil 14, 140 ausgleicht.

Um dem Bowdenzug 240A infolge der Neigungsverstellung des Rückenlehnenteiles und/oder der Lehnenklappung der Klapplehne 140 aus der im Wesentlichen vertikalen Position in die im Wesentlichen horizontale Position einen ersten Leerweg zu ermöglichen, ist eine erste Bowdenzugüberlänge 240-K1, in der Art einer ersten Schleife des Bowdenzuges 240A angeordnet, so dass das Rückenlehnenteil 14, 140 geneigt beziehungsweise die Klapplehne 140 frei auf das Sitzteil 12, 120 klappen kann, während sich der Bowdenzug 240A beim Neigen oder Klappen des Rückenlehnenteiles 14, 140 ohne eine Entriegelung des Ver- und Entriegelungsmechanismus 18 hervorzurufen, unter Ausnutzung seiner ersten Bowdenzugüberlänge 240-K1 entsprechend hinsichtlich seiner Lage anpasst.

Die erste Bowdenzugüberlänge 240-K1 dient mit anderen Worten dem Ausgleich der sich verändernden Abstände zwischen dem hinteren und dem vorderen Anlenkpunkt des Bowdenzuges 24A, 240A am hinteren Betätigungshebel 22, 22' und am vorderen Betätigungshebel 20, 20' bei der Neigungsverstellung und/oder der Klappung des Rückenlehnenteiles 14, 140 im Bereich des zwischen Sitzteil 12, 120 und Rückenlehnenteil 14, 140 angeordneten Beschlages 300, wobei die erste Bowdenzugüberlänge 240K-1 in vorteilhafter Weise unsichtbar unterhalb einer Verkleidung des Beschlages 300 auf der Außenseite des Beschlages 300 angeordnet ist.

Vom Beschlag 300 aus wird der Bowdenzug 240A weiter von der Außenseite des Sitzgestells des Sitzteiles 120 unter das Sitzgestell des Sitzteiles 120 nach innen geführt, das heißt nach innen unter die Sitzwanne 12A geführt.

Dort ist eine weitere zweite Bowdenzugüberlänge 240-K2 des Bowdenzuges 240A in der Art einer Schleife realisiert, da das Sitzteil 12, 120 des Fahrzeugsitzes 10, 100 wie erläutert in z-Richtung höhenverstellbar und nach der Entriegelung der Sitzlängsverstellung wie bisher auch in +x-Richtung reversibel in Fahrtrichtung verstellbar ist.

Mit anderen Worten dient die zweite Bowdenzugüberlänge 240-K2 zum Ausgleich der sich verändernden Abstände zwischen dem hinteren und dem vorderen Anlenkpunkt des Bowdenzuges 24A, 240A am hinteren Betätigungshebel 22, 22' und am vorderen Betätigungshebel 20, 20' bei der Höhenverstellung des Sitzteiles 12, 120.

Erfindungsgemäß wird wie insbesondere Figur 6 zeigt, zudem ein erster Bowdenzuggegenhalter 240E-1 gegenüber dem Stand der Technik modifiziert an einem Bauteil fixiert, wobei die Anordnung des Bowdenzuges 24A, 240A an dem Bauteil für eine Unabhängigkeit des Bodenzuges 24A, 240A von der Sitzlängsverstellung sorgt.

Da der Bowdenzug 24A, 240A jedoch wie erläutert am Sitzteil 12, 120 angebunden ist, wird der Bowdenzug 24A, 240A bei der Höhenverstellung trotzdem in z-Richtung nach oben beziehungsweise nach unten mitgenommen.

Die modifizierte Lösung in einer ersten Ausführungsform ist in Figur 6 gezeigt.

Der erste Bowdenzuggegenhalter 240E-1 ist an der Sitzoberschiene 16A angeordnet. Er übernimmt die Funktion des Bowdenzuggegenhalters 24E nach dem Stand der Technik, wobei durch die Anbringung an der Sitzoberschiene 16A die Unabhängigkeit des Bowdenzuges 240A von der Sitzlängsverstellung des Sitzteiles 12, 120 des Fahrzeugsitzes 100 weiterhin gewährleistet ist. Die Anordnung des Bowdenzuggegenhalters 24E seitlich des Fahrzeugsitzes 10, 100 hat sich als vorteilhaft herausgestellt, da dadurch unterhalb der Sitzwanne zwischen den Seitenteilen des Sitzteils 12, 120 der Bauraum für die Anordnung der zweiten Bowdenzugüberlänge 240-K2 des Bowdenzuges 240A genutzt werden kann.

Dort ist der Bowdenzug 240A in dem ersten Bowdenzuggegenhalter 240E-1 über eine Bowdenzugeinhängung 240D unabhängig von der Sitzlängsverstellung des Sitzteiles 120 eingehängt.

Im Ausführungsbeispiel ist der Bowdenzug 240A endseitig mit einer Übertragungsstange 250 verbunden, die bei der Betätigung des Bowdenzuges 240A zur Entriegelung des Ver- und Entriegelungsmechanismus 18 des Sitzschienenpaares 16 des Fahrzeugsitzes 100 in vertikaler Richtung angehoben wird.

Die Figur 6 zeigt, dass die weitere zweite Bowdenzugüberlänge 240-K2 in der Art einer zweiten Schleife 240K-2 unterhalb der Sitzwanne des Sitzteiles 12, 120 angeordnet ist, so dass das Sitzteil 120 frei in seiner Höhe gegenüber einer Karosserie beziehungsweise gegenüber dem karosseriefesten Sitzschienenpaar 16 verstellt werden kann, wobei sich die Lage der Schleife unterhalb der Sitzwanne bei der Höhenverstellung des Fahrzeugsitzes 10, 100 über das Sitzteil 12, 120 ändert, da der Bowdenzug 24A, 240 in seinem Verlauf an dem Sitzteil 12, 120 fixiert ist.

In vorteilhafter Weise wird der unter der Sitzwanne vorhandene Bauraum genutzt, so dass sich die unterhalb der Sitzwanne liegende zweite Schleife des Bowdenzuges 240A als zweite Bowdenzugüberlänge 240-K2 ohne eine Entriegelung des Ver- und Entriegelungsmechanismus 18 hervorzurufen, entsprechend hinsichtlich ihrer Lage an die Höhenverstellung anpassen kann.

Diese reversible Anpassung, bei der die Lage des Bowdenzuges 240A unter Ausnutzung der Überlänge der zweiten Schleife 240K-1 verändert wird, findet somit in vorteilhafter Weise unsichtbar unterhalb des Fahrzeugsitzes 100 statt.

Die Figur 8 zeigt noch einen anderen zweiten Bowdenzuggegenhalter 240E-2 in einer zweiten Ausführungsform. Der zweite Bowdenzuggegenhalter 240E-2 ist ebenfalls an der Sitzoberschiene 16A des Sitzschienenpaares 16 befestigt, wodurch ebenfalls die Unabhängigkeit des Bowdenzuges von der Sitzlängsverstellung des Fahrzeugsitzes 10, 100 über das Sitzteil 12, 120 gewährleistet ist.

Der zweite Bowdenzuggegenhalter 240E-2 umfasst ebenfalls eine Bowdenzugeinhängung 240D und ein Bowdenzugführungselement 240H, welches dazu dient den Bowdenzug 240A an den Bowdenzuggegenhalter 240E-2 heranzuführen.

Der zweite Bowdenzuggegenhalter 240E-2 umfasst ferner einen Verstellhebel 240E-21 der drehbar auf einer in y-Richtung verlaufenden Schwenkachse y400-y400 innerhalb des Bowdenzuggegenhalters 240E-2 gelagert ist.

An der zugehörigen drehbaren Achse des Verstellhebels 240E-21 ist der vordere Betätigungshebel 20, 20' aufgesetzt, der sich bei einer Bewegung des Verstellhebels 240E-21 entsprechend mitdreht.

Bei einer Betätigung des hinteren Betätigungshebels von seiner unbetätigten Position 22 zu seiner betätigten Position 22' gemäß Figur 4 oder Figur 5 entgegen der Uhrzeigerrichtung kommt es zu einer Verstellbewegung des Verstellhebels 240E-1, gemäß Figur 8 in Uhrzeigerrichtung, wodurch der vordere Betätigungshebel von seiner unbetätigten Position 20 in seine betätigte Position 20' nach oben schwenkt. Dadurch wird der Ver- und Entriegelungsmechanismus 18 zwischen Sitzoberschiene 16A und Sitzunterschiene 16B zur Sitzlängsverstellung des Fahrzeugsitzes 10, 100 freigegeben.

Zusammenfassung: Das Sitzteil 12, 120 ist anders als im Stand der Technik erfindungsgemäß in Richtung der Höhenerstreckung und das Rückenlehnenteil 14, 140 ist anders als im Stand der Technik als neigungsverstellbare Rückenlehne und Klapplehne ausgebildet.

Eine Entriegelungsbewegung des hinteren Betätigungshebels 20, 22' führt unabhängig von der durch die Höhenverstellung des Sitzteils 12, 120 in Richtung der z-Richtung eingestellten Höhe des Sitzteils 12, 120 und der durch die Neigungsverstellung eingestellten Neigung des Rückenlehnenteils 14, 140 beziehungsweise einer vollständigen Klappung des Rückenlehnenteiles 14, 140 als Klapplehne zu der Sitzschienenentriegelung über den Ver- und Entriegelungsmechanismus 18 zwischen Sitzoberschiene 16A und Sitzunterschiene 16B, wobei die Bowdenzugüberlängen 240-K1, 240-K2 den sich verändernden Abstand zwischen den Anlenkpunkten der jeweiligen Betätigungshebel 20, 20'; 22, 22' bei den Verstellbewegungen von Sitzteil 12, 120 und/oder Rückenlehnenteil 14, 140 ausgleichen, so dass stets eine freie Beweglichkeit des Bowdenzuges 24A, 240 innerhalb des Fahrzeugsitzes 10, 100 gegeben ist.

### Bezugszeichenliste

- 1: erste Entriegelungsbewegung
- 2: zweite Entriegelungsbewegung
- 10: Fahrzeugsitz
- 100: Fahrzeugsitz
- 12: Sitzteil
- 12A: Sitzwanne
- 120: Sitzteil
- 14: Rückenlehnenteil
- 14A: Rückenlehnenseitenteil
- 14B: Öffnung
- 140: klappbares Rückenlehnenteil (Klapplehne)
- 16: Sitzschienenpaar
- 16A: Sitzoberschiene
- 16B: Sitzunterschiene
- 18: Ver-und Entriegelungsmechanismus
- 20: vorderer Betätigungshebel -unbetätigt
- 20': vorderer Betätigungshebel -betätigt
- 22: hinterer Betätigungshebel -unbetätigt
- 22': hinterer Betätigungshebel -betätigt
- 24: Bowdenzugmechanik
- 240: modifizierte Bowdenzugmechanik
- 24A: Bowdenzug
- 240A: Bowdenzug
- 24B: Welle
- 24C: Bowdenzuggetriebe
- 24D: Bowdenzugeinhängung
- 240D: Bowdenzugeinhängung
- 24E: Bowdenzuggegenhalter
- 240E-1: erster Bowdenzuggegenhalter
- 240E-2: zweiter Bowdenzuggegenhalter
- 240E-21: Verstellhebel
- 24F: Bowdenzugtoleranzausgleichselement
- 24G: Bowdenzugfixierungselemente
- 240G: Bowdenzugfixierungselemente
- 24H: Bowdenzugführungselement
- 240H: Bowdenzugführungselement
- 240-K1: erste Bowdenzugüberlänge
- 240-K2: zweite Bowdenzugüberlänge
- 250: Übertragungsstange
- 300: Beschlag
- x: x-Richtung (Fahrtrichtung)
- y: y-Richtung (quer zur Fahrtrichtung)
- z: z-Richtung (vertikale Richtung im Fahrzeug)
- y1-y1: Schwenkachse vorderer Betätigungshebel 20
- y2-y2: Schwenkachse hinterer Betätigungshebel 22
- y3-y3: Schwenkachse zur Komfort-Neigungsverstellung des Rückenlehnenteiles 14
- y300-y300: Klappachse zur Klappung des Rückenlehnenteiles 140
- y400-y400: Schwenkachse des Verstellhebels des zweiten Bowdenzuggegenhalters

## Patentansprüche

1. Fahrzeugsitz (10, 100) mit einem gegenüber einem Sitzteil (12, 120) des Fahrzeugsitzes (10, 100) neigungsverstellbaren und umklappbaren Rückenlehnenteil (14, 140) und einem gegenüber den Sitzschienen (16A, 16B) eines Sitzschienenpaares (16) höhenverstellbaren Sitzteil (12, 120), welches mit dem Rückenlehnenteil (14, 140) verbunden ist, wobei der Fahrzeugsitz (10, 100) einen im vorderen Bereich des Fahrzeugsitzes (10, 100) angeordneten vorderen Betätigungshebel (20, 20') zur Freigabe einer Sitzlängsverstellung des Fahrzeugsitzes (10, 100) aufweist, der einen Ver- und Entriegelungsmechanismus (18) freigibt oder verriegelt, und der einen im hinteren Bereich des Fahrzeugsitzes (10, 100) an der Rückenlehne (14, 140) angeordneten hinteren Betätigungshebel (22, 22') aufweist, wobei eine Betätigung des hinteren Betätigungshebels (22, 22') auf den vorderen Betätigungshebel (20, 20') einwirkt, wobei eine leichtgängige Bedienbarkeit der Betätigungshebel (20, 20'/22, 22') durch eine zwischen den Betätigungshebeln (20, 20'/22, 22') angeordnete Bowdenzugmechanik (24) bewirkt wird, wobei ein zwischen dem an der Rückenlehne (14, 140) angeordneten hinteren Betätigungshebel (22, 22') und dem vorderen Betätigungshebel (20, 20') angeordnete Bowdenzug (24A, 240A) der Bowdenzugmechanik (24, 240) in seinem Verlauf eine erste Bowdenzugüberlänge (240-K1) aufweist, die bei der Neigungsverstellung und/oder der Klappung des Rückenlehnenteiles (14, 140) genutzt wird, um den sich durch die Verstellbewegungen des Rückenlehnenteiles (12, 120) verändernden Abstand zwischen dem hinteren und vorderen Anlenkpunkt des Bowdenzuges (24A, 240A) am hinteren Betätigungshebel (22, 22') und am vorderen Betätigungshebel (20, 20') auszugleichen, **dadurch gekennzeichnet, dass** der Bowdenzug (24A, 240A) der Bowdenzugmechanik (24, 240) in seinem weiteren Verlauf eine zweite Bowdenzugüberlänge (240-K2) aufweist, die bei der Höhenverstellung des Sitzteiles (12, 120) genutzt wird, um den sich verändernden Abstandes zwischen dem hinteren und dem vorderen Anlenkpunkt des Bowdenzuges (24A, 240A) am hinteren Betätigungshebel (22, 22') und am vorderen Betätigungshebel (20, 20') auszugleichen.

2. Fahrzeugsitz (10, 100) nach Anspruch 1, **dadurch gekennzeichnet, dass** die erste Bowdenzugüberlänge (240-K1) zum Ausgleich der sich verändernden Abstände zwischen dem hinteren und dem vorderen Anlenkpunkt des Bowdenzuges (24A, 240A) am hinteren Betätigungshebel (22, 22') und am vorderen Betätigungshebel (20, 20') bei der Neigungsverstellung und/oder der Klappung des Rückenlehnenteiles (14, 140) im Bereich eines zwischen Sitzteil (12, 120) und Rückenlehnenteil (14, 140) angeordneten Beschlages (300) angeordnet ist.

3. Fahrzeugsitz (10, 100) nach Anspruch 2, **dadurch gekennzeichnet, dass** die erste Bowdenzugüberlänge (240-K1) unterhalb einer Verkleidung des Beschlages (300) auf der Außenseite des Beschlages (300) angeordnet ist.

4. Fahrzeugsitz (10, 100) nach Anspruch 1, **dadurch gekennzeichnet, dass** die zweite Bowdenzugüberlänge (240-K2) unterhalb des Sitzteiles (12, 120) angeordnet ist.

5. Fahrzeugsitz (10, 100) nach Anspruch 1, **dadurch gekennzeichnet, dass** der Bowdenzug (24A, 240A) an seinem vorderen Anlenkpunkt an einem Bowdenzuggegenhalter (240E1, 240E-2) gehalten ist, der unterhalb des Sitzteiles (12, 120) mit einer gegenüber einer karosseriefesten Sitzunterschiene (16, 16B) angeordneten sitzfesten Sitzoberschiene (16, 16A) eines Sitzschienenpaares (16) verbunden ist.

6. Fahrzeugsitz (10, 100) nach Anspruch 1, **dadurch gekennzeichnet, dass** der vordere Betätigungshebel (20, 20') auf den mindestens einen in oder an den Sitzschienen (16A, 16B) eines Sitzschienenpaares (16) angeordneten Ver- und Entriegelungsmechanismus (18) einwirkt, wobei eine Freigabe beziehungsweise Verriegelung der Sitzlängsverstellung des Fahrzeugsitzes (10) durch Freigabe beziehungsweise Verriegelung einer je Sitzschienenpaar (16) ausgebildeten sitzfesten Sitzoberschiene (16, 16A) gegenüber einer karosseriefesten Sitzunterschiene (16, 16B) bewirkt wird.

7. Fahrzeugsitz (10, 100) nach Anspruch 1, **dadurch gekennzeichnet, dass** der vordere Betätigungshebel (20, 20') im vorderen Bereich eines Sitzteiles (12, 120) angeordnet ist und bei seiner Bewegung zur Freigabe der Sitzlängsverstellung des Fahrzeugsitzes (10) um eine erste Schwenkachse (y1-y1), die quer zur Fahrzeuglängsrichtung (x) liegt, schwenkbar ist.

8. Fahrzeugsitz (10, 100) nach Anspruch 7, **dadurch gekennzeichnet, dass** der vordere Betätigungshebel (20, 20') im vorderen Bereich eines Sitzteiles (12, 120) unterhalb einer Sitzwanne (12A) angeordnet ist.

9. Fahrzeugsitz (10, 100) nach Anspruch 1, **dadurch gekennzeichnet, dass** der hintere Betätigungshebel (22, 22') im Bereich eines Rückenlehnenseitenteiles (14A) des Rückenlehnenteiles (14) angeordnet ist und bei seiner Bewegung zur Freigabe der Sitzlängsverstellung des Fahrzeugsitzes (10) um eine zweite Schwenkachse (y2-y2), die quer zur Fahrzeuglängsrichtung (x) liegt, schwenkbar ist.

10. Fahrzeugsitz (10, 100) nach Anspruch 9, **dadurch gekennzeichnet, dass** der hintere Betätigungshebel (22, 22') des Rückenlehnenteiles (14) in der Mitte oder nahe der Mitte des Rückenlehnenseitenteiles (14A) des Rückenlehnenteiles (14) angeordnet ist

11. Fahrzeugsitz (10, 100) nach Anspruch 1, **dadurch gekennzeichnet, dass** eine erste Entriegelungsbewegung (1) durch den hinteren Betätigungshebel (22, 22') über die Bowdenzugmechanik (24) zwangsläufig zu einer zweiten Entriegelungsbewegung (2) des vorderen Betätigungshebels (20, 20') und dadurch zur Freigabe der Sitzlängsverstellung führt.

12. Fahrzeugsitz (10, 100) nach Anspruch 1, **dadurch gekennzeichnet, dass** die Bowdenzugmechanik (24) ein Bowdenzuggetriebe (24C) umfasst, welches eine Übersetzung der ersten Entriegelungsbewegung (1) des hinteren Betätigungshebels (22, 22') bewirkt.

13. Fahrzeugsitz (10, 100) nach Anspruch 1, **dadurch gekennzeichnet, dass** die Bowdenzugmechanik (24) ein Bowdenzugtoleranzausgleichselement (24F) umfasst.

## Claims

1. Vehicle seat (10, 100) having a backrest part (14, 140) which may be adjusted in inclination and folded over with respect to a seat part (12, 120) of the vehicle seat (10, 100) and a seat part (12, 120) which is height-adjustable with respect to the seat rails (16A, 16B) of a pair of seat rails (16) and which is connected to the backrest part (14, 140), wherein the vehicle seat (10, 100) has a front actuation lever (20, 20') which is arranged in the front region of the vehicle seat (10, 100) and releases or locks a locking and unlocking mechanism (18) in order to release a seat length adjustment system of the vehicle seat (10, 100) and the vehicle seat also has a rear actuation lever (22, 22') which is arranged on the backrest (14, 140) in the rear region of the vehicle seat (10, 100), wherein an actuation of the rear actuation lever (22, 22') has an effect on the front actuation lever (20, 20'), wherein a smooth operability of the actuation levers (20, 20'; 22, 22') is effected by means of a Bowden cable mechanism (24) arranged between the actuation levers (20, 20'; 22, 22'), wherein a Bowden cable (24A, 240A) which is arranged between the rear actuation lever (22, 22') arranged on the backrest (14, 140) and the front actuation lever (20, 20') of the Bowden cable mechanism (24, 240) has over the path thereof a first Bowden cable excess length (240-K1) which is used when adjusting the inclination of the backrest part (14, 140) and/or when folding said backrest part to compensate for the changing distance between the rear and front point of articulation of the Bowden cable (24A, 240A) on the rear actuation lever (22, 22') and on the front actuation lever (20, 20'), said distance changing owing to the adjustment movements of the backrest part (12, 120), **characterized in that** the Bowden cable (24A, 240A) of the Bowden cable mechanism (24, 240) has over the further path thereof a second Bowden cable excess length (240-K2) which is used when adjusting the height of the seat part (12, 120) to compensate for the changing distance between the rear and the front point of articulation of the Bowden cable (24A, 240A) on the rear actuation lever (22, 22') and on the front actuation lever (20, 20').

2. Vehicle seat (10, 100) according to Claim 1, **characterized in that**, for compensating for the changing distances between the rear and the front points of articulation of the Bowden cable (24A, 240A) on the rear actuation lever (22, 22') and on the front actuation lever (20, 20') during the inclination adjustment and/or the folding down of the backrest part (14, 140), the first Bowden cable excess length (240-K1) is arranged in the region of a fitting (300) arranged between the seat part (12, 120) and the backrest part (14, 140).

3. Vehicle seat (10, 100) according to Claim 2, **characterized in that** the first Bowden cable excess length (240-K1) is arranged below a cladding portion of the fitting (300) on the outer face of the fitting (300) .

4. Vehicle seat (10, 100) according to Claim 1, **characterized in that** the second Bowden cable excess length (240-K2) is arranged below the seat part (12, 120).

5. Vehicle seat (10, 100) according to Claim 1, **characterized in that** the Bowden cable (24A, 240A) at its front point of articulation is retained on a Bowden cable support (240E1, 240E-2), which is connected below the seat part (12, 120) to a seat upper rail (16, 16A) of a seat rail pair (16) fixed to the seat and arranged opposite a seat lower rail (16, 16B) fixed to the vehicle body.

6. Vehicle seat (10, 100) according to Claim 1, **characterized in that** the front actuation lever (20, 20') acts on the at least one locking and unlocking mechanism (18) arranged in or on the seat rails (16A, 16B) of a seat rail pair (16), wherein a release and/or locking of the seat length adjustment system of the vehicle seat (10) is effected by the release and/or locking of a seat upper rail (16, 16A) fixed to the seat and configured for each seat rail pair (16) opposite a seat lower rail (16, 16B) fixed to the vehicle body.

7. Vehicle seat (10, 100) according to Claim 1, **characterized in that** the front actuation lever (20, 20') is arranged in the front region of a seat part (12, 120) and during its movement for releasing the seat length adjustment system of the vehicle seat (10) is pivotable about a first pivot axis (y1-y1) which is located transversely to the vehicle longitudinal direction (x).

8. Vehicle seat (10, 100) according to Claim 7, **characterized in that** the front actuation lever (20, 20') is arranged in the front region of a seat part (12, 120) below a seat part (12A).

9. Vehicle seat (10, 100) according to Claim 1, **characterized in that** the rear actuation lever (22, 22') is arranged in the region of a backrest side part (14A) of the backrest part (14) and during its movement for releasing the seat length adjustment system of the vehicle seat (10) is pivotable about a second pivot axis (y2-y2) which is located transversely to the vehicle longitudinal direction (x).

10. Vehicle seat (10, 100) according to Claim 9, **characterized in that** the rear actuation lever (22, 22') of the backrest part (14) is arranged in the centre or in the vicinity of the centre of the backrest side part (14A) of the backrest part (14).

11. Vehicle seat (10, 100) according to Claim 1, **characterized in that** a first unlocking movement (1) by the rear actuation lever (22, 22') via the Bowden cable mechanism (24) forcibly leads to a second unlocking movement (2) of the front actuation lever (20, 20') and as a result to the release of the seat length adjustment system.

12. Vehicle seat (10, 100) according to Claim 1, **characterized in that** the Bowden cable mechanism (24) comprises a Bowden cable gear unit (24C) which effects a transmission of the first unlocking movement (1) of the rear actuation lever (22, 22').

13. Vehicle seat (10, 100) according to Claim 1, **characterized in that** the Bowden cable mechanism (24) comprises a Bowden cable tolerance compensation element (24F).

## Revendications

1. Siège de véhicule (10, 100) comprenant une partie dossier (14, 140) rabattable et réglable en inclinaison par rapport à une partie assise (12, 120) du siège de véhicule (10, 100) et une partie assise (12, 120) réglable en hauteur par rapport aux rails de siège (16A, 16B) d'une paire de rails de siège (16) et reliée à la partie dossier (14, 140), le siège de véhicule (10, 100) comportant un levier d'actionnement avant (20, 20') qui est disposé dans la région avant du siège de véhicule (10, 100) et destiné à libérer un réglage longitudinal du siège de véhicule (10, 100), qui libère ou verrouille un mécanisme de verrouillage et de déverrouillage (18), et qui comporte un levier d'actionnement arrière (22, 22') disposé dans la région arrière du siège de véhicule (10, 100) au niveau du dossier (14, 140), un actionnement du levier d'actionnement arrière (22, 22') agissant sur le levier d'actionnement avant (20, 20'), une capacité de commande souple des leviers d'actionnement (20, 20'/22, 22') étant obtenue par un mécanisme à câble Bowden (24) disposé entre les leviers d'actionnement (20, 20'/22, 22'), un câble Bowden (24A, 240A) du mécanisme à câble Bowden (24, 240), lequel câble Bowden est disposé entre le levier d'actionnement arrière (22, 22') disposé au niveau du dossier (14, 140) et le levier d'actionnement avant (20, 20'), ayant sur son étendue une première surlongueur (240K1) qui est utilisée lors du réglage de l'inclinaison et/ou du rabattement de la partie dossier (14, 140) pour compenser la distance, qui varie à cause des mouvements de réglage de la partie dossier (12, 120), entre les points d'articulation arrière et avant du câble Bowden (24A , 240A) au niveau du levier d'actionnement arrière (22, 22') et du levier d'actionnement avant (20, 20'), **caractérisé en ce que** le câble Bowden (24A, 240A) du mécanisme à câble Bowden (24, 240) a sur son autre étendue une deuxième surlongueur (240-K2) qui est utilisée lors du réglage en hauteur de la partie assise (12, 120) pour compenser la distance variable entre les points d'articulation arrière et avant du câble Bowden (24A, 240A) au niveau du levier d'actionnement arrière (22, 22') et du levier d'actionnement avant (20, 20').

2. Siège de véhicule (10, 100) selon la revendication 1, **caractérisé en ce que** la première surlongueur (240-K1) est disposée dans la région d'une ferrure (300) disposée entre la partie assise (12, 120) et la partie dossier (14, 140) afin de compenser les distances variables entre les points d'articulation arrière et avant du câble Bowden (24A, 240A) au niveau du levier d'actionnement arrière (22, 22') et du levier d'actionnement avant (20, 20') lors du réglage de l'inclinaison et/ou du rabattement de la partie dossier (14, 140).

3. Siège de véhicule (10, 100) selon la revendication 2, **caractérisé en ce que** la première surlongueur (240-K1) est disposée au-dessous d'un revêtement de la ferrure (300) du côté extérieur de la ferrure (300).

4. Siège de véhicule (10, 100) selon la revendication 1, **caractérisé en ce que** la deuxième surlongueur (240-K2) est disposée au-dessous de la partie assise (12, 120).

5. Siège de véhicule (10, 100) selon la revendication 1, **caractérisé en ce que** le câble Bowden (24A, 240A) est maintenu au niveau de son point d'articulation avant sur un contre-appui (240E1, 240E-2) qui est relié, au-dessous de la partie assise (12, 120), à un rail de siège supérieur (16, 16A), fixé au siège et disposé par rapport à un rail de siège inférieur (16, 16B) fixé à la carrosserie, d'une paire de rails de siège (16).

6. Siège de véhicule (10, 100) selon la revendication 1, **caractérisé en ce que** le levier d'actionnement avant (20, 20') agit sur au moins un mécanisme de verrouillage et de déverrouillage (18) disposé dans ou sur les rails de siège (16A, 16B) d'une paire de rails de siège (16), une libération ou un verrouillage du réglage longitudinal du siège de véhicule (10) par libération ou verrouillage d'un rail de siège supérieur (16, 16A), fixé au siège et conçu pour chaque paire de rails de siège (16), par rapport à un rail de siège inférieur (16, 16B) fixé à la carrosserie.

7. Siège de véhicule (10, 100) selon la revendication 1, **caractérisé en ce que** le levier d'actionnement avant (20, 20') est disposé dans la région avant d'une partie assise (12, 120) et, lors de son déplacement, peut pivoter sur un premier axe de pivotement (y1-y1), transversal à la direction longitudinale (x) du véhicule, pour libérer le réglage longitudinal du siège de véhicule (10).

8. Siège de véhicule (10, 100) selon la revendication 7, **caractérisé en ce que** le levier d'actionnement avant (20, 20') est disposé dans la région avant d'une partie assise (12, 120) au-dessous d'un baquet de siège (12A).

9. Siège de véhicule (10, 100) selon la revendication 1, **caractérisé en ce que** le levier d'actionnement arrière (22, 22') est disposé dans la région d'une partie dossier latérale (14A) de la partie dossier (14) et, lors de son déplacement, peut pivoter sur un deuxième axe de pivotement (y2-y2), transversal à la direction longitudinale (x) du véhicule, pour libérer le réglage longitudinal du siège de véhicule (10).

10. Siège de véhicule (10, 100) selon la revendication 9, **caractérisé en ce que** le levier d'actionnement arrière (22, 22') de la partie dossier (14) est disposé au milieu ou près du milieu de la partie dossier latérale (14A) de la partie dossier (14).

11. Siège de véhicule (10, 100) selon la revendication 1, **caractérisé en ce qu'**un premier mouvement de déverrouillage (1) du levier d'actionnement arrière (22, 22') par le biais du mécanisme à câble Bowden (24) entraîne inévitablement un deuxième mouvement de déverrouillage (2) du levier d'actionnement avant (20, 20') et donc la libération du réglage longitudinal du siège.

12. Siège de véhicule (10, 100) selon la revendication 1, **caractérisé en ce que** le mécanisme à câble Bowden (24) comprend une transmission à câble Bowden (24C) qui provoque une multiplication du premier mouvement de déverrouillage (1) du levier d'actionnement arrière (22, 22').

13. Siège de véhicule (10, 100) selon la revendication 1, **caractérisé en ce que** le mécanisme à câble Bowden (24) comprend un élément de compensation de tolérance de câble Bowden (24F).
